# EUROPÄISCHE PATENTANMELDUNG

(11) **EP 4 614 246 A1**
(43) Veröffentlichungstag der Anmeldung: **10.09.2025**
(21) Anmeldenummer: 24162258.8
(22) Anmeldetag: 08.03.2024
(51) Int. Cl.: G05B 19/18, B23Q 3/155, G05B 19/4061, B25J 15/00, B25J 9/16

(54) **MASCHINE MIT WENIGSTENS EINER MASCHINENACHSE UND EINEM MEHRFACHINSTRUMENTENTRÄGER**

(71) Anmelder: Siemens Aktiengesellschaft, 80333 München (DE)
(72) Erfinder: Alkafafi, Loay, 91052 Erlangen (DE); Andreo, Gaelle, 91056 Erlangen (DE); Bock, Marco, 91056 Erlangen (DE); Kreilos, Tobias, 77746 Schutterwald (DE); Pitz, Thomas, 71277 Rutesheim (DE); Rack, Philip Joachim, 70197 Stuttgart, S-West (DE); Schermann, Aleksandra, 71229 Leinfelden-Echterdingen (DE); Spielmann, Ralf, 70569 Stuttgart (DE)
(74) Vertreter: Siemens Patent Attorneys

(57) **Zusammenfassung**

Bei einer Maschine (2) oder einem Verfahren zum Betrieb einer Maschine (2) mit wenigstens einer verstellbaren Maschinenachse (X, Y, Z, B, C) und mit einem wenigstens ein erstes (T1) und ein zweites Instrument (T2) tragenden Mehrfachinstrumententräger (R) sollen nacheinander mittels des ersten Instruments (T1) ein erster ein Objekt (16) betreffender Vorgang und mittels des zweiten Instruments (T2) ein zweiter das Objekt (16) betreffender Vorgang ausgeführt werden. Zwischen den beiden Vorgängen wird zumindest in einem Zeitbereich eine Position des Mehrfachinstrumententrägers (R) gegenüber dem Objekt (16) mittels der verstellbaren Maschinenachse (X, Y, Z, B, C) verändert und gleichzeitig das erste Instrument (T1) von einer aktiven in eine passive Pose und das zweite Instrument (T2) von einer passiven in eine aktive Pose bewegt. Dies verkürzt die für die Vorgänge benötigte Zeit und spart Energie.

## Beschreibung

Die Erfindung betrifft eine Maschine sowie ein Verfahren zum Betrieb einer Maschine mit wenigstens einer verstellbaren Maschinenachse und mit einem wenigstens ein erstes und ein zweites Instrument tragenden Mehrfachinstrumententräger, wobei nacheinander mittels des ersten Instruments ein erster ein Objekt betreffender Vorgang und mittels des zweiten Instruments ein zweiter das Objekt betreffender Vorgang ausgeführt werden.

An Werkzeugmaschinen mit Werkzeugspindeln, z.B. Fräs- oder Drehmaschinen, muss zum Austausch des Werkzeugs die Bearbeitung und meist auch der Bewegungsfluss unterbrochen werden. Meist wird mit einem Werkzeug in der Werkzeugspindel, z.B. einem Fräser bei einer Fräsmaschine, abhängig von dem verwendeten Werkzeugtyp so viel wie möglich und wirtschaftlich sinnvoll bearbeitet. Jedoch hat der Einsatz eines Werkzeugs für unterschiedliche Bearbeitungen auch seine Grenzen. Ein Bohrer mit einem gewissen Bohrerdurchmesser kann nur für die Bearbeitung eines ganz bestimmen Loch-Durchmessers benutzt werden und ein Fräser mit einem bestimmten Durchmesser kann Löcher mit unterschiedlichen Durchmessern erzeugen, solange das wirtschaftlich Sinn macht, insbesondere entsprechend dem Verhältnis von Fräserdurchmesser zu Lochdurchmesser.

Wenn das aktuell in der Werkzeugmaschine verwendete Werkzeug für die gewünschte Bearbeitung nicht mehr passend oder bereits abgenutzt ist, wird es in der Regel vollautomatisch durch ein anderes ersetzt, insbesondere ausgetauscht. Für das Ersetzen eines Werkzeugs durch ein anderes gibt es bei Werkzeugmaschinen und Roboter unter anderem folgende Konzepte:
A) Die Werkzeugspindel (Spindel) der Werkzeugmaschine fährt beispielsweise durch entsprechend gesteuerter Bewegungen von drei Linearachsen der Maschine in das Magazin, z.B. Tellermagazin, Magazinrad, Kettenmagazin oder Flächenmagazin, legt das aktuell in der Spindel befindliche Werkzeug ab, fährt zum nächsten Werkzeug und nimmt das nächste Werkzeug in die Spindel auf. Das bislang zur Bearbeitung des Werkstücks vorgesehene Werkzeug wird also gegen ein anderes ausgewechselt bzw. ausgetauscht.
B) Die Spindel fährt beispielsweise durch entsprechend gesteuerter Bewegungen von drei Linearachsen der Maschine an eine vordefinierte, meist immer gleiche Stelle (Werkzeugwechselposition bzw. -punkt) und lässt sich durch einen Greifer (z.B. Einfach- oder Doppelgreifer) oder einen Roboter das Werkzeug austauschen. Auch hier wird demnach ein Werkzeug aus der Spindel entfernt und durch ein anderes ersetzt.
C) Bei der "Spindel" handelt es sich um eine sogenannte Mehrfachspindel, z.B. einen Werkzeugrevolver, bei der mehrere einzelne Spindeln in einer Baueinheit zusammengefasst sind. In wenigstens zwei dieser Spindeln ist jeweils ein Werkzeug eingesetzt. Diese können nacheinander benutzt werden, wobei vorzugsweise in eine Kollisionsbetrachtung auch die unbenutzten bzw. nicht aktiven Werkzeuge sowie vorteilhaft auch das Werkstück mit einbezogen werden. Es findet hierbei also kein Werkzeugtausch in dem Sinne statt, dass ein Werkzeug aus einer Spindel entnommen und dafür ein anderes Werkzeug in diese Spindel eingesetzt wird.

Mitunter gibt es auch Kombinationen der oben genannten Konzepte zum Ersetzen von Werkzeugen.

Diese unterschiedlichen Konzepte gibt es mehr oder weniger auch bei Werkzeugmaschinen, bei denen das Werkzeug "feststeht", d.h. während der Bearbeitung seine Position beibehält, und sich stattdessen das Werkstück bewegt, z.B. bei speziellen Drehmaschinen. Ferner können die o.g. unterschiedlichen Konzepte auch bei bestimmten Robotern realisiert werden, die ebenfalls spanende Bearbeitungen durchführen können und damit auch als Werkzeugmaschinen im Sinne der Erfindung zu verstehen sind.

Wird bei einer Werkzeugmaschine mit einem Mehrfachwerkzeugträger, z.B. einem Werkzeugrevolver, ein Werkzeug durch ein anderes ersetzt, so sind damit zwei Vorgänge verbunden: einerseits erfolgt eine "Umdefinition" bezüglich des aktiven Werkzeugs. Wenn z.B. das bislang verwendete Werkzeug T1 für die nachfolgende Bearbeitung durch ein anderes Werkzeug T2 ersetzt werden soll, so wird dies durch einen entsprechenden Befehl im Arbeitsprogramm (z.B. "T = T2" oder "T = FRAESER D1") angezeigt und ein bei der Programmierung der Bahnbewegung des Werkzeugs verwendeter Referenzpunkt des Werkzeugs, insbesondere der sogenannte "TCP" (Tool Center Point), "springt" von der Spitze des bislang verwendeten Werkzeugs T1 zur Spitze des nachfolgend verwendeten Werkzeugs T2. Das "Springen des TCP" wird z.B. durch die neue Werkzeug- bzw. Schneidenanwahl, z.B. durch die entsprechende Programmanweisung erreicht. Wenn der TCP damit auf das neue Werkzeug "umdefiniert" ist, kann mit dem neuen aktiven Werkzeug weitergearbeitet werden. Alle nachfolgenden Bewegungs- bzw. Bahnanweisungen beziehen sich dann auf das neue Werkzeug, insbesondere den TCP des neuen Werkzeugs.

Andererseits erfolgt beim Ersatz eines Werkzeugs durch ein anderes in Verbindung mit einem Mehrfachwerkzeugträger eine Neuausrichtung der Werkzeuge, was in Verbindung mit einem Werkzeugrevolver eine Drehbewegung des Werkzeugrevolvers um einen bestimmten Winkel um eine Werkzeugrevolverachse bedeutet. Diese Bewegung (Werkzeugwechselbewegung) erfolgt in der Regel derart, dass das neue Werkzeug am Ende der Bewegung dieselbe Position und/oder Orientierung (Pose) einnimmt, die zuvor das alte (vorherige) Werkzeug innehatte. Das bislang aktive (alte) Werkzeug wird demnach in eine Ruheposition bzw. passive Position bzw. passive Pose und ein anderes, nachfolgend verwendetes (neues) Werkzeug von einer Ruheposition in eine aktive Position bzw. aktive Pose geschwenkt.

Bei als Werkzeugmaschinen ausgebildeten Robotern wird typischerweise ähnlich wie bei Fräsmaschinen gearbeitet. So befinden sich beispielsweise unterschiedliche Werkzeuge in einem Flächenmagazin, aus dem der Roboter sie entnehmen und in die Werkzeugaufnahme des Roboters einwechseln kann.

Bei Werkzeugmaschinen, z.B. Fräs- oder Drehmaschinen oder Robotern, müssen zum Ersetzten des Werkzeugs die Bearbeitung des Werkstücks und der Bewegungsfluss unterbrochen werden.

Wenn ein bislang aktives ("altes") Werkzeug an einer Werkzeugmaschine durch ein anderes ("neues") Werkzeug ersetzt werden soll, wird zunächst die Bearbeitung gestoppt. Relevante Achsen bewegen das Werkzeug anschließend zu einer fest definierten Position, der Werkzeugtausch- bzw. Werkzeugwechselposition, und an dieser Position wird das aktuelle Werkzeug durch ein anderes Werkzeug ersetzt, mit dem eine nachfolgende Bearbeitung des Werkstücks erfolgen soll. Die beteiligten Achsen fahren das Werkzeug dazu meist auf Positionen, die weit genug von dem Werkstück entfernt sind, so dass Kollisionen beim Ersetzen des Werkzeugs vermieden werden, aber auch damit freier Raum um das Werkzeug herum entsteht, um es mit Greifern zu fassen und z.B. aus der Spindel herausziehen zu können bzw. die Rotationsachse (Rundachse), bezüglich der die Werkzeuge angeordnet sind (Revolver, Planetenwerkzeugkopf, etc.), drehen zu können, ohne dass dabei Kollisionen verursacht werden.

Das Entfernen des Werkzeugs vom Werkstück, das Ersetzen des Werkzeugs und das Anfahren des neuen Werkzeugs an das Werkstück kosten Zeit und Energie. Die benötigte Zeit zählt zu den sog. "Nebenzeiten", in denen die betreffende Maschine nicht aktiv ist, d.h. keine direkte Bearbeitung des Werkstücks durchführt. Eine Bearbeitung ist umso wirtschaftlicher, je kürzer die Nebenzeiten sind. In der aktuellen Situation wird jedoch nicht nur die Reduzierung der Nebenzeiten ein immer größerer Faktor, auch die damit verbundene notwendige Energie rückt als Faktor immer mehr in den Vordergrund, denn kürzere Nebenzeiten führen in der Regel zu einer kürzeren, für die gesamte Bearbeitung benötigten Bearbeitungszeit und damit insgesamt zu einem verringerten Energieverbrauch der Maschine.

Die genannten Vorgänge treten nicht nur im Zusammenhang mit Werkzeugmaschinen auf, sondern auch bei vielen anderen vollautomatisch ablaufenden Prozessen, Vorgängen, Anlagen etc., bei denen innerhalb eines "Arbeitsraums" unterschiedliche Instrumente (Werkzeugen, Greifern, Aktoren, Effektoren etc.) verwendet werden. Das kann z.B. ein Roboter sein, der auf seinem Roboterarm einen Planetenwerkzeugkopf mit Bohrern unterschiedlicher Durchmesser hat, so dass dieser an einer Flugzeughaut die unterschiedlich starken Durchgangslöcher für Nieten erzeugen kann. Das kann z.B. eine Anlage sein, die mit unterschiedlich großen Farbspritzdüsen einen Geburtstagskuchen für Kinder mit dem vorher bestellten, personalisierten Lieblingsmotiv farbig bemalt. Dies kann z.B. auch ein medizinisches Gerät, insbesondere ein chirurgischer Roboter sein, der mit unterschiedlichen medizinischen Instrumenten eine Behandlung eines Patienten durchführt. All diese vollautomatischen Maschinen haben eines gemeinsam: sie vollführen mit dem aktiven Instrument eine "TCP Bahnbewegung", bei der ein TCP (Tool Center Point) eines Instruments entlang einer vorgegebenen Bahnkurve (Trajektorie) bewegt wird.

Der Bediener der Maschine möchte die Bahnbewegung idealerweise ohne Rücksicht auf die Dimensionen des aktiven Instruments immer gleich definieren können. Das bedeutet, die Abmessungen das aktiven Instruments müssen von der Steuerung automatisch berücksichtigt werden. In der Regel werden daher die von dem Instrument auszuführenden Bahnkurven für einen bestimmten Referenzpunkt, wie etwa den TCP, programmiert. Das ist heute Stand der Technik.

Der Wechsel bzw. Übergang von einem Instrument zu einem anderen Instrument (Instrumentenwechsel, Instrumententausch, Instrumentenersatz) unterbricht die Bearbeitung und erzeugt zusätzliche, unerwünschte Bewegungen (Nebenbewegungen) additiv zur eigentlich gewünschten Bahn, während der das Instrument "aktiv" ist und den für das Instrument vorgesehenen (Bearbeitungs-, Handlings-, ...) Vorgang ausführt.

Wenn durch die Verwendung eines Mehrfachinstrumententrägers Instrumente für einen Instrumentenersatz nicht ausgetauscht, insbesondere nicht aus der Maschine entfernt werden müssen, erfolgt der Ersatz eines Instruments durch ein anderes durch eine Bestimmung des neuen aktiven Instruments und damit einhergehend die Festlegung des bislang aktiven Instruments als inaktiv (passiv), sowie einer Instrumentenwechselbewegung, durch die das neue Instrument in der Regel die gleiche Position bzw. Pose einnimmt, die zuvor das vorherige ("alte") Instrument innehatte.

Aus Sicherheitsgründen wird die Anwahl ("Umdefinition") des Werkzeugs, wie oben schon beschrieben, auf einer "sicheren" Positionen - in einem bestimmten Abstand vom Werkstück - durchgeführt. Verständlich, denn durch die Umdefinition des aktiven Werkzeugs und die damit einhergehende Bewegung des Mehrfachwerkzeugträgers könnten beispielsweise unbeabsichtigte Kollisionen zwischen einem Werkzeug und dem Werkstück oder Teilen der Maschine stattfinden.

Aus der DE102004038820A1 ist ein Verfahren zum Betreiben einer Werkzeugmaschine bekannt, welche ein Maschinengestell, einen Werkstückträger, einen mit mehreren Werkzeugaufnahmen versehenen Mehrfachwerkzeugträger sowie eine Maschinensteuerung umfasst. Der Mehrfachwerkzeugträger weist einen gegenüber einem Werkzeugträgergehäuse bewegbaren Werkzeugträgerkopf zur Ausführung von Werkzeugpositionierbewegungen auf, wobei in die Werkzeugaufnahmen einsetzbare Werkzeugeinheiten mit einer zumindest Werkzeugidentifikationsdaten speichernden und durch einen Lesekopf auslesbaren Identifikationseinheit versehen werden.

Aus der EP2628574B1 ist ein Verfahren zur Simulation einer Bearbeitungsmaschine bekannt, wobei ein Rechner in einer Rechner-Cloud zur Ausführung webfähiger Simulationsdienste geeignet ist, wobei in der Cloud für die simulierte Bearbeitungsmaschine einschließlich deren Steuerung ein digitaler Zwilling gebildet wird und wobei dem digitalen Zwilling eine Konfiguration und ein Zustand der simulierten Bearbeitungsmaschine eingeprägt wird.

Nachteilig beim Wechsel von Instrumenten, z.B. Werkzeugen, bei bekannten Maschinen, z.B. Werkzeugmaschinen, sind die dafür jeweils benötigte Zeitdauer (Nebenzeit) und der damit einhergehende Energieverbrauch.

Aufgabe der Erfindung ist es, bei einer Maschine mit wenigstens einer verstellbaren Maschinenachse und einem mit der Maschine verbundenen Mehrfachinstrumententräger einen Instrumentenwechsel zu verbessern.

Diese Aufgabe wird gelöst durch ein Verfahren zum Betrieb einer Maschine mit den in Patentanspruch 1 angegebenen Verfahrensschritten, also ein Verfahren zum Betrieb einer Maschine mit wenigstens einer verstellbaren Maschinenachse und mit einem wenigstens ein erstes und ein zweites Instrument tragenden Mehrfachinstrumententräger, wobei nacheinander mittels des ersten Instruments ein erster ein Objekt betreffender Vorgang und mittels des zweiten Instruments ein zweiter das Objekt betreffender Vorgang ausgeführt werden und wobei zwischen den beiden Vorgängen zumindest in einem Zeitabschnitt eine Position des Mehrfachinstrumententrägers gegenüber dem Objekt mittels der verstellbaren Maschinenachse verändert und gleichzeitig das erste Instrument von einer aktiven in eine passive Pose und das zweite Instrument von einer passiven in eine aktive Pose bewegt werden.

Ferner wird die Aufgabe gelöst durch eine Maschine mit den Merkmalen gemäß Patentanspruch 12, also eine Maschine mit wenigstens einer verstellbaren Maschinenachse und mit einem wenigstens ein erstes und ein zweites Instrument tragenden Mehrfachinstrumententräger, wobei nacheinander mittels des ersten Instruments ein erster ein Objekt betreffender Vorgang und mittels des zweiten Instruments ein zweiter das Objekt betreffender Vorgang ausführbar sind und wobei zwischen den beiden Vorgängen zumindest in einem Zeitabschnitt eine Position des Mehrfachinstrumententrägers mittels der verstellbaren Maschinenachse veränderbar und gleichzeitig das erste Instrument von einer aktiven in eine passive Pose und das zweite Instrument von einer passiven in eine aktive Pose bewegbar sind.

Weiterhin wird die Aufgabe gelöst durch eine Steuereinrichtung nach Anspruch 18 und einen digitalen Zwilling der Maschine nach Anspruch 20.

Die Erfindung bietet den Vorteil, dass wenigstens zwei bisher nacheinander stattfindende Vorgänge, nämlich das Überführen des Mehrfachinstrumententrägers in eine Umgebung, in der eine kollisionsfreie Instrumentenwechselbewegung möglich ist (Positionierbewegung) sowie die eigentliche Instrumentenwechselbewegung nun zumindest abschnittsweise parallel (gleichzeitig) stattfinden. Dies spart Zeit und Energie.

Die Erfindung ist für eine Vielzahl unterschiedlichster Maschinen anwendbar. Beispiele dafür sind: Werkzeugmaschinen, Produktionsmaschinen, 3D-Drucker, Roboter, medizintechnische Maschinen oder Geräte usw.

Die erfindungsgemäße Maschine umfasst wenigstens eine verstellbare, insbesondere lagegeregelte Maschinenachse (nachfolgend auch kurz als "Achse" bezeichnet, z.B. Linearachse oder Rundachse), mittels der ein Instrument, insbesondere ein Werkzeug, relativ zu einem Objekt, insbesondere einem Werkstück, bewegbar (verstellbar) ist. Vorzugsweise umfasst die erfindungsgemäße Maschine mehrere lagegeregelte Linear- und/oder Rundachsen, die mittels einer geeigneten Steuereinrichtung, insbesondere einer numerischen bzw. CNC-Steuerung, im Verbund (interpolierend) verfahren werden können.

Vorzugsweise kann im Zusammenspiel der beweglichen Achsen nicht nur ein bestimmter Punkt des Instruments (z.B. der TCP bei einem Werkzeug) entlang der Trajektorie bewegt, sondern dabei auch eine bestimmte, vorzugsweise ebenfalls vorgebbare und entlang der Trajektorie veränderbare Orientierung, also die jeweilige Pose, vorgegeben werden.

Mittels der verstellbaren Maschinenachse bzw. -achsen kann ein mit der Maschine verbundener Mehrfachinstrumententräger relativ zu einem Objekt verstellt (bewegt) werden, so dass ein mit dem Mehrfachinstrumententräger verbundenes Instrument ebenfalls relativ zu dem Objekt bewegt wird.

Bei dem im Zusammenhang mit der Erfindung verwendeten Mehrfachinstrumententräger handelt es sich um eine Baueinheit, welche - insbesondere lösbar - mit der Maschine verbindbar ist und an dem mehrere (wenigstens zwei) Instrumente - vorzugsweise ebenfalls lösbar - befestigbar sind.

Bei einer bevorzugten Ausführungsform umfasst der Mehrfachinstrumententräger wenigstens eine - vorzugsweise lagegeregelte - Achse (Mehrfachinstrumententrägerachse), mittels der ein erstes mit dem Mehrfachinstrumententräger verbundenes Instrument von einer aktiven in eine passive Position bzw. Pose und gleichzeitig ein zweites mit dem Mehrfachinstrumententräger verbundenes Instrument von einer passiven in eine aktive Position bzw. Pose bewegbar ist (Instrumenten- bzw. Werkzeugwechselbewegung).

Diese Ausführungsform bietet den Vorteil einer einfachen Handhabung bzw. Programmierung der Maschine, da für die Instrumentenwechselbewegung keine Maschinenachse erforderlich ist. Die Maschinenachsen können weiterhin frei (unabhängig von bestimmten Posen der Instrumente) programmiert werden.

Die aktive Pose eines Instruments zeichnet sich dadurch aus, dass das Instrument lediglich in dieser Pose den das Objekt betreffenden Vorgang ausführen kann, nicht jedoch in einer passiven Pose. Die aktive Pose ist zumeist gekennzeichnet durch eine bestimmte Lage und/oder Orientierung des Instruments bezüglich eines Referenzobjekts, z.B. eine Orientierung in z-Richtung eines Maschinenkoordinatensystems.

Die Erfindung unterscheidet demnach einerseits zwischen einer Positionierbewegung, die in der Regel dadurch zustande kommt, dass einem Referenzpunkt des Mehrfachinstrumententrägers, insbesondere einem Referenzpunkt eines an dem Mehrfachinstrumententräger befestigten Instruments, insbesondere einem TCP eines an dem Mehrfachinstrumententräger befestigten Instruments, oder einem Referenzpunkt des Objekts eine Position in einem Arbeitsraum der Maschine vorgegeben wird (Positionieranweisung) und daraufhin der Referenzpunkt zu der vorgegebenen Position verfahren wird. Da es bei dem das Objekt betreffenden Vorgang auf die Relativbewegung zwischen dem Instrument und dem Objekt ankommt, ist es ebenso möglich, dass die Positionieranweisung und die daraus resultierende Positionierbewegung eine Bewegung des Objekts in dem Arbeitsraum der Maschine bewirken und das Instrument ortsfest in dem Arbeitsraum verbleibt. Auch eine Bewegung sowohl des Instruments als auch des Objekts im Arbeitsraum der Maschine infolge der Positionieranweisung ist möglich.

Andererseits sieht die Erfindung eine Instrumentenwechselbewegung vor, bei der die an dem Mehrfachinstrumententräger befestigten Instrumente in Folge einer Instrumentenwechselanweisung bezüglich einer Mehrfachinstrumententrägerachse bewegt, insbesondere um einen bestimmten Winkel um eine Mehrfachinstrumententrägerachse geschwenkt werden.

Es ist im Zusammenhang mit der Erfindung auch möglich, dass der Mehrfachinstrumententräger selbst keine bewegbare Achse umfasst und die Überführung eines ersten Instruments von einer aktiven Pose (Arbeitsposition) in eine passive Pose (Ruheposition) und gleichzeitig eines zweiten Instruments von einer passiven Pose (Ruheposition) in eine aktive Pose (Arbeitsposition) mittels Achsen der Maschine (Maschinenachsen) erfolgt.

So vielfältig wie die von der Erfindung betroffenen Maschinen sind auch die von diesen Maschinen bewegten Instrumente, insbesondere abhängig von der Anwendung, für die die Maschine vorgesehen ist. Beispiele für derartige Instrumente sind: Instrumente zur Herstellung oder Be- und/oder Verarbeitung von Werkstücken (Werkzeuge, Düsen, Elektroden etc.), medizinische bzw. chirurgische Instrumente, Aktoren, Endeffektoren für Roboter etc.

Auch für das Objekt, auf das die betreffende Maschine einwirkt, bestehen - abhängig von der Anwendung der Maschine, vielfältige Möglichkeiten. So kann es sich bei dem Objekt um ein Werkstück, ein Produkt oder ein Lebewesen (Mensch, Tier, Patient) handeln.

Abhängig von dem jeweiligen Objekt bestehen auch für den das Objekt betreffenden Vorgang viele Möglichkeiten. So kann der Vorgang eine Herstellung, eine Be- und/oder Verarbeitung, eine Verlagerung oder einen medizinischen bzw. chirurgischen Eingriff bedeuten.

Im Zusammenhang mit einem Werkzeugwechsel bei einer Werkzeugmaschine sieht die Erfindung insbesondere vor, dass einerseits eine Positionierbewegung eines mit der Werkzeugmaschine verbundenen Mehrfachwerkzeugträgers, beispielsweise eines Werkzeugrevolvers, und zumindest in einem Zeitbereich gleichzeitig eine Werkzeugwechselbewegung stattfinden.

Vorzugsweise weist das neue bzw. nachfolgende Instrument, insbesondere Werkzeug, am Ende der Instrumenten- bzw. Werkzeugwechselbewegung dieselbe Orientierung auf, die zu Beginn der Instrumenten- bzw. Werkzeugwechselbewegung das alte bzw. vorherige Instrument bzw. Werkzeug innehatte. Dies vereinfacht die Programmierung der Bewegung bzw. Bahnplanung für das neue Instrument bzw. Werkzeug.

Vorzugsweise weist das neue bzw. nachfolgende Instrument, insbesondere Werkzeug, am Ende der Instrumenten- bzw. Werkzeugwechselbewegung dieselbe Position auf, die zu Beginn der Instrumenten- bzw. Werkzeugwechselbewegung das alte bzw. vorherige Instrument bzw. Werkzeug innehatte. Auch dies vereinfacht die Programmierung der Bewegung bzw. Bahnplanung für das neue Instrument bzw. Werkzeug.

Vorzugsweise weist das neue bzw. nachfolgende Instrument, insbesondere Werkzeug, am Ende der Instrumenten- bzw. Werkzeugwechselbewegung dieselbe Pose auf, die zu Beginn der Instrumenten- bzw. Werkzeugwechselbewegung das alte bzw. vorherige Instrument bzw. Werkzeug innehatte. Als Pose (oder auch "räumliche Lage") wird dabei die Kombination von Position und Orientierung - hier bezogen auf die Instrumente bzw. Werkzeuge - bezeichnet. Auch diese Vorgehensweise vereinfacht die Programmierung der Bewegung bzw. Bahnplanung für das neue Instrument bzw. Werkzeug.

Vorzugsweise befindet sich das neue Instrument bzw. Werkzeug, insbesondere ein TCP des neuen Instruments bzw. Werkzeugs, am Ende des Instrumenten- bzw. Werkzeugwechsels in derselben Bearbeitungs- oder Rückzugsebene, in der sich zuvor das alte Instrument bzw. Werkzeug befand.

Die Erfindung ist insbesondere für solche Maschinen vorgesehen, bei denen eine für einen Referenzpunkt des Instruments (TCP) bezogene Vorgabe der Bewegungsbahnen bzw. Bewegungs-Trajektorien erfolgt.

Eine besondere Ausführungsform der Erfindung sieht vor, dass ein Instrumentenwechsel und eine Umsetzbewegung zumindest in einem Zeitbereich gleichzeitig stattfinden. Als Umsetzbewegung wird dabei normalerweise eine Bewegung eines Instruments bzw. Werkzeugs zwischen zwei Positionen des Objekts verstanden, an denen jeweils ein das Objekt betreffender Vorgang ausgeführt werden soll. Sollen beispielsweise an einem Werkstück an den Positionen P1 und P2 mit einem Bohrer T Bohrlöcher gebohrt werden, so betrifft die Umsetzbewegung die Bewegung des Bohrers zwischen den beiden Positionen P1 und P2, in denen sich der Bohrer außerhalb des Werkstücks befindet. Soll dabei noch ein Werkzeugwechsel mittels eines Werkzeugrevolvers stattfinden, da z.B. die Bohrlöcher bei den Positionen P1 und P2 unterschiedliche Durchmesser aufweisen sollen und dazu unterschiedliche, an dem Werkzeugrevolver vorhandene Bohrer T1 und T2 benötigt werden, so gestaltete sich der Vorgang bisher wie folgt: in einer ersten Teilumsetzbewegung wird der erste Bohrer T1 von der Position P1 zu einer Werkzeugwechselposition PW bewegt. Nachfolgend wird der Bohrer T2 als neues bzw. aktives Werkzeug bestimmt, womit der Bohrer T1 zum passiven Werkzeug wird. Nachfolgend erfolgt bei dem Werkzeugrevolver die Werkzeugwechselbewegung, durch die der Bohrer T2 die Orientierung einnimmt, die zuvor der Bohrer T1 innehatte. In einer zweiten Teilumsetzbewegung wird nun der Bohrer T2 von seiner Position am Ende der Werkzeugwechselbewegung zu der Position P2 bewegt.

Bei der Umsetzbewegung handelt es sich demnach um eine spezielle Positionierbewegung.

Im Zusammenhang mit der Erfindung gestaltet sich der oben beschriebene Vorgang nun so, dass zumindest in einem Zeitbereich eine Umsetzbewegung zwischen den Bohrlöchern, also eine Bewegung eines auf den Werkzeugrevolver bezogenen Referenzpunktes von einer Position P1 hin zu einer Position P2, und gleichzeitig eine Werkzeugwechselbewegung stattfindet, die eine Umorientierung der Bohrer zur Folge hat.

Allgemein wird demnach - zumindest in einem Zeitbereich gleichzeitig mit der Umsetzbewegung - ein erstes Instrument T1 von einer aktiven Position bzw. Pose in eine Ruheposition bzw. -pose und ein zweites Instrument T2 von einer Ruheposition in eine aktive Position bzw. Pose gebracht. Die Überführung eines Instruments von der Ruhepose in die Arbeitspose (Werkzeugwechselbewegung) erfolgt also - zumindest abschnittsweise-gleichzeitig mit der Positionier- bzw. Umsetzbewegung. Dies spart Zeit und Energie.

Besonders vorteilhaft ist es, wenn die Bewegungen so aufeinander abgestimmt erfolgen, dass beide Vorgänge - also die Instrumentenwechselbewegung der betreffenden Instrumente (mit dem Übergang des TCP im Fall von Werkzeugen) und die Positionierbewegung, um beispielsweise das neue Instrument für die weitere Verwendung an eine neue Position gegenüber der letzten Position des vorherigen Instruments bezüglich des Objekts zu bewegen - so aufeinander abgestimmt erfolgen, dass beide Vorgänge zumindest näherungsweise gleichzeitig starten und gleichzeitig enden. Dann wird durch die Zeitdauer des länger andauernden Vorgangs auch die Zeitdauer bzw. Geschwindigkeit für den an und für sich kürzeren Vorgang bestimmt, so dass Achsen der Maschine nicht unnötig hohen Beschleunigungen ausgesetzt sind, womit die Maschine geschont und der Energieverbrauch weiter gesenkt werden.

In der Regel erfolgt die Verfahrbewegung der wenigstens einen Maschinenachse derart, dass das neue Instrument nach der Instrumentenwechselbewegung eine neue Position gegenüber der letzten Position des vorherigen Instruments bezüglich des Objekts einnimmt. Dies ist beispielsweise dann der Fall, wenn eine Bearbeitung eines Werkstücks mit einem neuen Werkzeug an einer neuen Stelle (Position) fortgesetzt werden soll.

Es ist jedoch auch möglich, dass mit dem neuen Instrument zunächst wieder die "alte" Position angefahren werden soll, die das vorherige Instrument vor dem Beginn der Instrumentenwechselbewegung innehatte. Die durch die Maschinenachse ausgeführte Verfahrbewegung (Umsetzbewegung) bedeutet dann: bringe den Mehrfachinstrumententräger zu einer bestimmten Position (z.B. "Instrumentenwechselposition") und wieder zurück, wobei dann erfindungsgemäß die Instrumentenwechselbewegung zumindest abschnittsweise gleichzeitig mit den entsprechenden Verfahrbewegungen der beteiligten Maschinenachsen erfolgt.

Eine Ausführungsform der Erfindung sieht vor, dass der Mehrfachinstrumententräger eine verstellbare Mehrfachinstrumententrägerachse aufweist und die Instrumente durch Verstellen der Achse von der aktiven in die passive Pose und umgekehrt bewegbar sind.

Dies vereinfacht die Handhabung bzw. Programmierung des Instrumentenwechsels (der Instrumentenwechselbewegung). Auch ist dann keine zusätzliche Maschinenachse zum Instrumentenwechsel erforderlich. Die Maschinenachsen können so weiterhin frei (unabhängig von bestimmten Posen der Instrumente) programmiert bzw. verwendet werden.

Alternativ kann der Mehrfachinstrumententräger aber auch starr mit der Maschine verbunden sein und die Maschine weist wenigstens eine (weitere) verstellbare Achse auf, mittels der die Instrumente von der aktiven in die passive Pose und umgekehrt bewegbar sind. Insbesondere ist bei dieser Ausführungsform eine üblicherweise bei einem Mehrfachinstrumententräger vorhandene Rundachse durch eine Rundachse der Maschine ersetzt.

Eine Ausführungsform der Erfindung sieht vor, dass der Maschine eine Steuereinrichtung zugeordnet ist, die die Bewegungen der wenigstens einen verstellbaren Maschinenachse (Positionierbewegung) und der Instrumente beim Instrumentenwechsel (Instrumentenwechselbewegung) automatisch ermittelt und die betreffenden Achsen (Maschinenachse(n), Mehrfachinstrumententrägerachse) entsprechend steuert.

Eine weitere Ausführungsform der Erfindung sieht vor, dass das Maschinensystem eine (aus Sicht der Maschine externe) Recheneinrichtung, insbesondere ein CAM-System, umfasst, das die Bewegungen der wenigstens einen verstellbaren Maschinenachse (Positionierbewegung) und der Instrumente beim Instrumentenwechsel (Instrumentenwechselbewegung) automatisch ermittelt. Die ermittelten Bewegungen (Trajektorien) werden dann der Steuereinrichtung zugeführt, die die betreffenden Achsen (Maschinenachse(n), Mehrfachinstrumententrägerachse) entsprechend steuert. Gegebenenfalls kann dem CAM-System ein Postprozessor nachgeschaltet oder ein Postprozessor von dem CAM-System umfasst sein, der die Ausgangsdaten des CAM-Systems an die jeweilige Steuereinrichtung anpasst.

Vorteilhaft handelt es sich sowohl bei der Maschinenachse (bzw. den Maschinenachsen) als auch bei der Mehrfachinstrumententrägerachse um lagegeregelte Achsen, die mittels der Steuereinrichtung gesteuert (bzw. "geregelt" im streng regelungstechnischen Sinn) werden können. Vorteilhaft erkennt die Steuerung anhand eines von ihr ausgeführten Steuerprogramms, dass ein neues Werkzeug gewählt und die Behandlung des Objekts an einer anderen Position fortgesetzt werden sollen. Die Steuerung ermittelt dann vorteilhaft eigenständig die entsprechend aufeinander abgestimmten Bewegungen im Sinne der Erfindung. Dadurch wird der Benutzer von entsprechendem Programmieraufwand entlastet.

Bei der Steuereinrichtung handelt es sich beispielsweise um eine numerische Steuerung (CNC-Steuerung - Computerized Numerical Control), die insbesondere eine Werkzeugmaschine oder einen Roboter steuert.

Die entsprechenden Bewegungen können jedoch auch außerhalb der Steuereinrichtung, z.B. durch Programmierung mittels eines (externen) Programmiersystems oder die Verwendung eines CAM-Systems (Computer Aided Manufacturing) oder eines PP-Systems (Post Processor) bestimmt werden. Letzteres ist in der Regel einem CAM-System nachgeschaltet. Erfindungsgemäß werden die erforderlichen Bewegungen durch alle genannten Systeme automatisch derart bestimmt, dass sie zumindest in einem Zeitbereich gleichzeitig ablaufen.

Eine Ausführungsform der Erfindung sieht vor, dass die Bewegungen derart bestimmt werden, dass Kollisionen vermieden werden. Insbesondere umfasst die Steuereinrichtung eine Kollisionsvermeidungseinrichtung und die Bewegungen, insbesondere auch die Bewegungen im Zusammenhang mit dem Instrumentenwechsel, werden mittels der Steuereinrichtung derart bestimmt, dass keine Kollisionen auftreten.

Vorteilhaft im Zusammenhang mit der Erfindung ist die gezielte Überlagerung von Bewegungen, der Instrumentenwechselbewegung einerseits und der Verfahrbewegung(en) andererseits, so dass diese aufeinander abgestimmt - insb. abschnittsweise gleichzeitig - erfolgen und die Bewegungen automatisch derart bestimmt und koordiniert werden, dass keine Kollision auftritt.

Vorteilhaft kann ein Mindestabstand der Instrumente zu dem Objekt (und anderen Objekten, beispielsweise Teilen der Maschine) vorgegeben werden, in Abhängigkeit dessen die Bewegungen bestimmt werden. Dadurch kann ein - von dem jeweiligen Benutzer bzw. der jeweiligen Anwendung abhängiger - Kompromiss zwischen Sicherheit und Geschwindigkeit gefunden werden.

Die Instrumentenwechselbewegung zum Überführen des bisherigen Instruments von der Arbeitsposition in die Ruheposition sowie des neuen Instruments von der Ruheposition in die Arbeitsposition kann auf vielfältige Art und Weise erfolgen. Beispiele dafür sind:
1) Der Mehrfachinstrumententräger umfasst wenigstens eine lagegeregelte Achse, mittels der die Instrumentenwechselbewegungen erfolgen. Beispielsweise hat der Mehrfachinstrumententräger eine Symmetrieachse (Mehrfachinstrumententrägerachse) um die der Mehrfachinstrumententräger bzw. die daran befestigten Instrumente rotierbar sind und das neue Instrument wird durch Rotation des Mehrfachinstrumententräger um einen bestimmten Winkel um eben diese Rotationsachse in die Arbeitsposition und gleichzeitig das zuvor aktive Instrument von der Arbeitsposition in die Ruheposition überführt. Vorzugsweise sind Instrumente gleichmäßig über einen Umfang - und damit jeweils um einen best. Winkel zueinander versetzt - über den Umfang eines Mehrfachwerkzeugträgers verteilt angeordnet, woraus sich der Winkel, um den das betreffende neue Werkzeug geschwenkt werden muss, ergibt.
2) Es wird ein neues, zuletzt nicht aktives, an dem Mehrfachinstrumententräger vorhandenes Instrument mit einem neuen Referenzpunkt (z.B. TCP) als aktives Instrument bestimmt. Dem neuen aktiven Instrument bzw. Referenzpunkt wird im nächsten Schritt eine neue Pose bzw. Position zugewiesen, die dieses in Verbindung mit wenigstens einer lagegeregelten Achse des Mehrfachinstrumententrägers und/oder wenigstens einer lagegeregelten Achse der Maschine einnimmt.
3) Durch die jeweils bekannten Geometrien (Abmessungen) des Mehrfachinstrumententrägers und der daran befestigten Instrumente ist auch die Anordnung (Pose) der Instrumente am Mehrfachinstrumententräger relativ zueinander bekannt. Das bedeutet: ist die aktuelle Pose eines der Instrumente bekannt, z.B. des aktiven Instruments, so können daraus auch die Posen der übrigen Instrumente bestimmt werden. Durch die relativ zueinander fest vorgegebene Anordnung der Instrumente am Mehrfachinstrumententräger kann so auch dem "alten", bislang aktiven Instrument derart eine neue Pose (Ruheposition bzw. -pose) zugewiesen werden, dass damit automatisch das neue (nachfolgend aktive) Instrument die gewünschte neue Pose (Arbeitsposition bzw. -pose) einnimmt. Erfolgt nachfolgend der Übergang (die Umschaltung) von dem alten auf das neue Instrument, also die Aktivierung des neuen Instruments, so befindet sich dieses bereits in der richtigen, neuen Pose.

Eine Ausführungsform der Erfindung sieht vor, dass das erste Instrument am Ende des ersten Vorgangs eine Endposition einnimmt und das zweite Instrument zu Beginn des zweiten Vorgangs eine von der Endposition verschiedene Startposition einnimmt. Diese Ausführungsform entspricht dem in der Praxis in Verbindung mit Werkzeugmaschinen häufig anzutreffenden Fall, dass die Bearbeitung eines Werkstücks mit dem bisherigen ("alten") Werkzeug ab einem bestimmten Zeitpunkt der Bearbeitung an einer bestimmten Position (Position A) des Werkstücks abgeschlossen ist und die Bearbeitung an einer anderen Stelle (Position B) des Werkstücks und mit einem anderen ("neuen") Werkzeug fortgesetzt werden soll.

Daraus ergibt sich im Zusammenhang mit der Erfindung der Vorteil, dass die benötigte Zeit, um von der Position A zu der Position B zu gelangen, gleichzeitig auch zum Werkzeugwechsel genutzt wird.

Eine Ausführungsform der Erfindung sieht vor, dass es sich bei der Maschine um eine Werkzeugmaschine, eine Arbeitsmaschine, eine Produktionsmaschine, einen 3D-Drucker, einen Roboter oder ein medizintechnisches Gerät handelt.

Dies zeigt die vielfältigen Einsatzmöglichkeiten der Erfindung.

Eine Ausführungsform der Erfindung sieht vor, dass es sich bei dem Instrument um ein Werkzeug, eine Düse, ein medizinisches, insbesondere chirurgisches Instrument, einen Aktor oder einen Effektor, insbesondere Endeffektor handelt.

Eine Ausführungsform der Erfindung sieht vor, dass es sich bei dem Objekt um ein Werkstück, ein Bauteil, ein Produkt oder ein Lebewesen handelt.

Eine Ausführungsform der Erfindung sieht vor, dass es sich bei dem Vorgang um eine Herstellung, eine Be- und/oder Verarbeitung oder einen medizinischen bzw. chirurgischen Eingriff handelt.

Auch die oben genannten Beispiele zeugen von den vielfältigen Einsatzmöglichkeiten der Erfindung.

Eine erfindungsgemäße Maschine zur Durchführung eines erfindungsgemäßen Verfahrens weist vorteilhaft wenigstens eines der nachfolgend genannten Merkmale auf:
- Die Maschine umfasst einen Mehrfachinstrumententräger, an dem wenigstens ein erstes und ein zweites Instrument befestigt sind.
- Mittels des ersten Instruments wird ein erster, ein Objekt betreffender Vorgang und mittels des zweiten Instruments wird ein zweiter, das Objekt betreffender Vorgang ausgeführt.
- Der Mehrfachinstrumententräger weist eine verstellbare Mehrfachinstrumententrägerachse auf und die Instrumente sind durch Verstellen dieser Achse von der aktiven in die passive Pose und umgekehrt bewegbar.
- Der Maschine ist eine Steuereinrichtung zugeordnet, mittels der die Bewegungen der verstellbaren Maschinenachsen und der Instrumente zum Überführen zwischen den Posen ermittelbar und/oder steuerbar sind.
- Die Steuereinrichtung umfasst eine Kollisionsvermeidungseinrichtung und die Bewegungen der Maschinenachsen und ggf. der Mehrfachinstrumententrägerachse werden derart bestimmt, dass keine Kollisionen auftreten.
- Das erste Instrument nimmt am Ende des ersten Vorgangs eine Endposition und das zweite Instrument zu Beginn des zweiten Vorgangs eine - insbesondere von der Endposition verschiedene - Startposition ein, wobei die Bewegungen der Instrumente und der Maschinenachsen derart koordiniert bestimmbar sind, dass die damit einhergehende Instrumentenwechselbewegung für den Instrumentenwechsel und die Verfahrbewegungen der Maschinenachsen zwischen der Endposition und der Startposition zumindest teilweise gleichzeitig erfolgen.
- Bei der Maschine handelt es sich um eine Werkzeugmaschine, eine Arbeitsmaschine, eine Produktionsmaschine, einen 3D-Drucker, einen Roboter oder ein medizintechnisches, insbesondere chirurgisches Gerät.
- Bei dem Instrument handelt es sich um ein Werkzeug, eine Düse, ein chirurgisches Instrument, einen Aktor oder einen Endeffektor.
- Bei dem Objekt um ein Werkstück, ein Bauteil, ein Produkt oder ein Lebewesen.
- Bei dem Vorgang handelt es sich um eine Herstellung, eine Be- und/oder Verarbeitung oder einen medizinischen, insbesondere chirurgischen Eingriff.
- Der Mehrfachinstrumententräger ist lösbar mit der Maschine verbindbar.

Eine zur Durchführung eines erfindungsgemäßen Verfahrens geeignete Steuereinrichtung zeichnet sich insbesondere dadurch aus, dass Umsetzbewegungen von Instrumenten und Verfahrbewegungen von Maschinenachsen so bestimmbar sind, dass zumindest in einem Zeitbereich eine Position des Mehrfachinstrumententrägers mittels wenigstens einer verstellbaren Maschinenachse veränderbar und gleichzeitig ein erstes Instrument von einer aktiven in eine passive Pose und ein zweites Instrument von einer passiven in eine aktive Pose bewegbar sind. Insbesondere werden die betreffenden Bewegungen derart bestimmt, dass diese wenigstens im Wesentlichen simultan ausgeführt werden und die gleiche Zeitdauer benötigen.

Die Erfindung wird nachfolgend anhand eines Ausführungsbeispiels näher erläutert. Dabei zeigen:
- FIG 1: eine Werkzeugmaschine mit einem daran befestigten Werkzeugrevolver,
- FIG 2 bis FIG 7: eine Bearbeitung eines Werkstücks unter Verwendung eines Werkstückrevolvers gemäß dem Stand der Technik,
- FIG 8: eine Bearbeitung eines Werkstücks unter Verwendung eines Werkstückrevolvers gemäß der Erfindung,
- FIG 9: Verfahrensschritte bei der Durchführung eines erfindungsgemäßen Verfahrens.

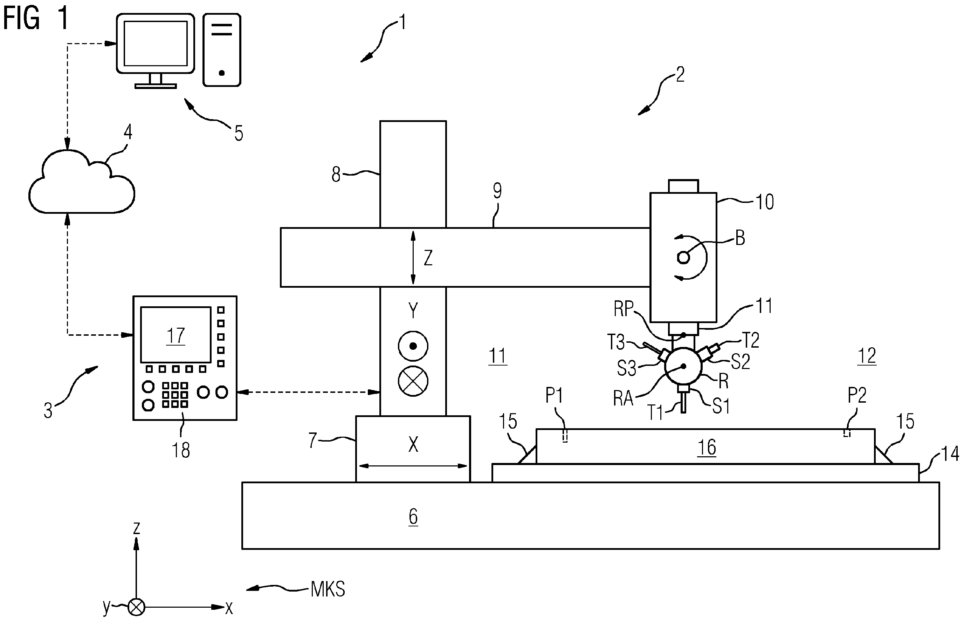

In FIG 1 ist schematisiert ein Maschinensystem in Form eines Werkzeugmaschinensystems 1 dargestellt. Das Werkzeugmaschinensystem 1 umfasst eine Maschine in Form einer Werkzeugmaschine 2. Ferner umfasst das Werkzeugmaschinensystem 1 eine mit der Werkzeugmaschine 2 verbundene numerische Steuereinrichtung in Form einer CNC-Steuerung 3 zur Steuerung der Werkzeugmaschine 2. Darüber hinaus umfasst das Werkzeugmaschinensystem 1 eine über ein Netzwerk 4, zum Beispiel das Internet, verbundene externe Recheneinrichtung in Form eines CAD/CAM/PP-Systems 5.

Die dargestellte Werkzeugmaschine 2 verfügt über 3 lagegeregelte Linearachsen X, Y und Z, wobei ein erstes Tragelement 7 in x-Richtung, ein zweites Tragelement 8 in y-Richtung und ein drittes Tragelement 9 in z-Richtung bezüglich eines bezüglich der Werkzeugmaschine 2 ortsfesten Maschinenkoordinatensystems MKS verstellbar ist.

Das erste Tragelement 7 ist über einen in x-Richtung verstellbaren Linearantrieb (nicht dargestellt) mit einem ruhenden Maschinengestellt 6 verbunden, das zweite Tragelement 8 ist über einen in y-Richtung verstellbaren Linearantrieb (nicht dargestellt) mit dem ersten Tragelement 7 verbunden und das dritte Tragelement 9 ist über einen in z-Richtung verstellbaren Linearantrieb (nicht dargestellt) mit dem zweiten Tragelement 8 verbunden.

Das dritte Tragelement 9 trägt einen Spindelantrieb 10, der seinerseits um eine zur Y-Achse parallele, lagegeregelte Rundachse B schwenkbar ist. Der Spindelantrieb 10 weist eine Aufnahme 11 für einen Mehrfachinstrumententräger in Form eines Werkzeugrevolvers R auf. Der Werkzeugrevolvers R umfasst 3 Werkzeugspindeln S1, S2 und S3, in denen jeweils ein Instrument in Form eines Werkzeugs, insbesondere eines Bohrers T1, T2 bzw. T3 eingespannt ist. Weiterhin umfasst der Werkzeugrevolver R eine Rotationsachse RA, um die die Werkzeugspindeln S1 bis S3 mit den darin eingespannten Bohrern T1 bis T3 schwenkbar sind.

Weiterhin umfasst die Werkzeugmaschine 2 einen Werkstücktisch 14 an dem mittels der Werkzeughalter 15 ein Objekt in Form eines Werkstücks 16 befestigt ist.

Die Werkzeugmaschine 2 verfügt im Rahmen des Ausführungsbeispiels demnach über fünf lagegeregelte Maschinenachsen, durch die eine Relativbewegung zwischen dem Werkzeugrevolver R und dem Werkstück 16 durchgeführt werden kann. Es handelt sich somit um eine sogenannte 5-achsige Werkzeugmaschine (5-Achs-Maschine), wobei an dieser Stelle angemerkt sei, dass eine Werkzeugmaschine selbstverständlich auch mehr, aber auch weniger als fünf Maschinenachsen aufweisen kann. Die Antriebe der lagegeregelten Maschinenachsen wurden wegen der besseren Übersichtlichkeit im Ausführungsbeispiel nicht dargestellt.

Die Werkzeugmaschine 2 ist mit der CNC-Steuerung 3 verbunden, die anhand eines Teileprogramms und/oder einer Handbedieneingabe Bewegungssollwerte für die Maschinenachsen zur Steuerung einer zwischen den Werkzeugen T1 bis T3 und dem Werkstück 16 stattfindenden Relativbewegung ermittelt. Die CNC-Steuerung 3 ermittelt die Bewegungssollwerte insbesondere anhand des Teileprogramms, in dem die von dem jeweiligen Werkzeug T1 bzw. T2 bzw. T3 relativ zu dem Werkstück 16 durchzuführenden Bewegungen in Form von Befehlen bzw. Programmanweisungen, in der Regel in Form von G-Code, definiert sind. Bei den mittels der Werkzeuge (Bohrer T1 bis T3) auszuführenden Vorgängen handelt es sich demnach um das Bohren von Löchern an bestimmten Positionen des Werkstücks 16.

Alternativ oder zusätzlich kann die Bewegung der Werkzeuge T1 bis T3 und/oder des Werkstücks 16 auch mittels einer Handbedieneingabe über eine Bedieneinrichtung mit Bedienelementen 18 in Verbindung mit einer Anzeigevorrichtung in Form eines Displays 17 der CNC-Steuerung 3 von einem Bediener vor Ort an der Werkzeugmaschine 2 vorgegeben werden. Die Bedienelemente 18 umfassen hierfür insbesondere Taster oder Drehregler. Vorteilhaft kann das Display 17 auch als Touchscreen und damit ebenfalls als Bedienelement ausgeführt sein.

Das Teileprogramm wird üblicherweise in einer aus Sicht der CNC-Steuerung externen Recheneinrichtung, im Ausführungsbeispiel dem CAD/CAM/PP-System 5 außerhalb der CNC-Steuerung 3 erzeugt und von dort, insbesondere über das Netzwerk 4, auf die CNC-Steuerung 3 übertragen.

Bei der Abarbeitung des Teileprogramms erzeugt die CNC-Steuerung 3 in einem bestimmten Takt, dem Interpolations-takt, Lagesollwerte x, y und z für die Linearachsen sowie Winkellagesollwerte β (nicht dargestellt) für die Rundachse B. Durch diese Bewegungssollwerte wird das jeweilige Werkzeug T1, T2 bzw. T3 mit vorgegebener Orientierung relativ zu dem Werkstück 16 entlang einer Bewegungsbahn (Bahn) bewegt.

Neben den reinen Lagesollwerten sind mittels der numerischen Steuereinrichtung auch die Dynamik der Relativbewegung bzw. der einzelnen Achsen betreffende Größen, insbesondere die Geschwindigkeit, die Beschleunigung oder der Ruck, ermittelbar bzw. einstellbar.

Die Erfindung betrifft speziell solche Vorgänge, bei denen aus technischen bzw. Sicherheitsgründen wenigstens zwei Bewegungen erforderlich sind: einerseits eine Relativbewegung (Positionierbewegung) zwischen dem Werkzeugrevolver (Mehrfachinstrumententräger) und dem Werkstück (Objekt), andererseits eine Werkzeugwechselbewegung (Instrumentenwechselbewegung), bei der wenigstens zwei Werkzeuge ihre Position bezüglich einer Werkzeugrevolverachse (Instrumententrägerachse) verändern.

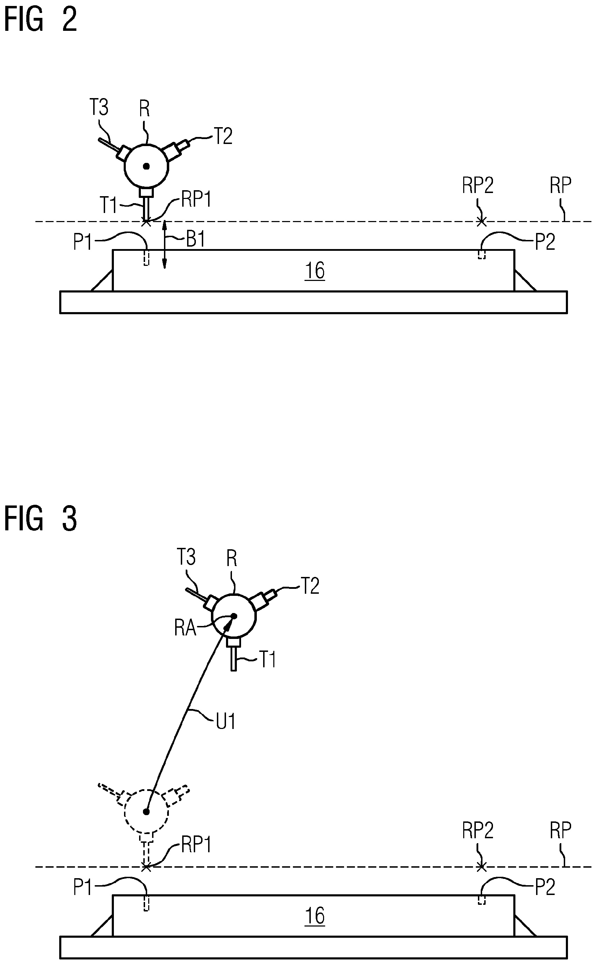

Die Figuren FIG 2 bis FIG 7 veranschaulichen beispielhaft die Bewegungsvorgänge nach dem Stand der Technik. In das Werkstück 16 sollen an den Positionen P1 und P2 die ersichtlichen Bohrlöcher, die sich hinsichtlich Durchmesser und Bohrtiefe unterscheiden, gebohrt werden. Wie aus FIG 2 ersichtlich, wird dazu zunächst der TCP des Werkzeugs T1 mit der vorgesehenen Orientierung - senkrecht zur Werkstückoberfläche des Werkstücks 16 - in eine Rückzugsposition RP1 einer Rückzugsebene RP gebracht. Dort wird die Spindel, in der sich das Werkzeug T1 befindet, auf die Solldrehzahl gebracht und mit konstanter Vorschubgeschwindigkeit in Richtung des Werkstücks 16 (negative z-Richtung) bewegt, bis der TCP des Werkzeugs T1 die vorgesehene Bohrtiefe erreicht hat. Anschließend wird das Werkzeug T1 in positiver z-Richtung zurück bewegt in die Ausgangsposition RP1. Diese Bewegungsvorgänge sind in FIG 2 durch den Doppelpfeil B1 angedeutet.

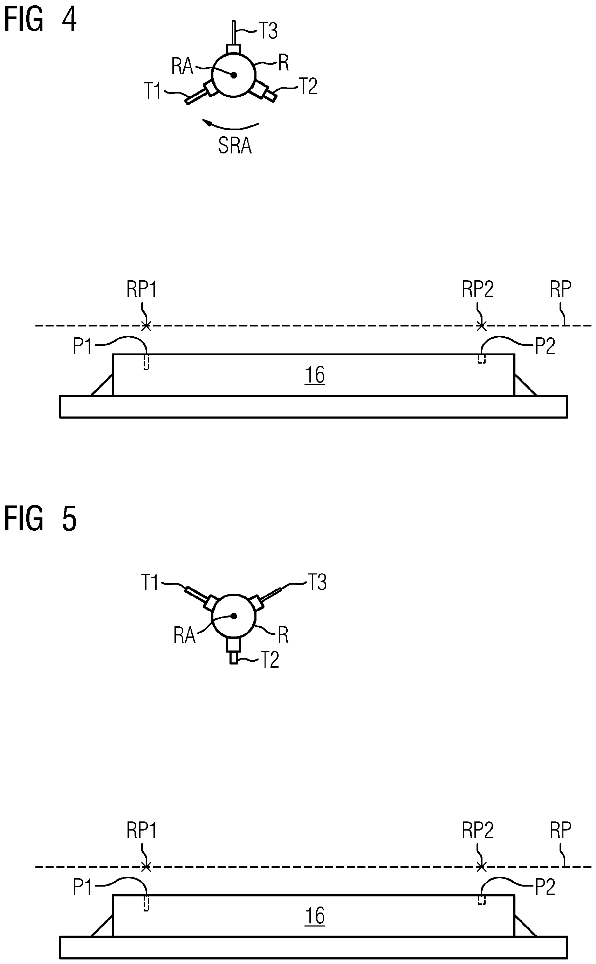

FIG 3 veranschaulicht den ersten Abschnitt eines zwischen den beiden Bearbeitungen vorgesehenen Werkzeugwechsel. Dabei wird der Werkzeugrevolver R zunächst mittels einer Positionierbewegung in Form einer Umsetzbewegung U1 in eine Werkzeugwechselposition gebracht und insbesondere so weit von dem Werkstück 16 entfernt, dass der Werkzeugrevolver R gefahrlos - also ohne dass eine Kollision zu befürchten wäre - um eine Werkzeugrevolverachse RA gedreht (geschwenkt) werden kann. Diese Schwenkbewegung SRA ist in FIG 4 veranschaulicht. FIG 5 zeigt nun die Situation am Ende der Schwenkbewegung, in der der Werkzeugrevolver R so ausgerichtet ist, dass nun das Werkzeug T2 eine aktive Pose, das heißt eine Orientierung in z-Richtung, einnimmt und sich das zuvor aktive Werkzeug T1 in einer Ruheposition (bzw. -pose), um 120° gegenüber der aktiven Position (bzw. -pose) geschwenkt, befindet.

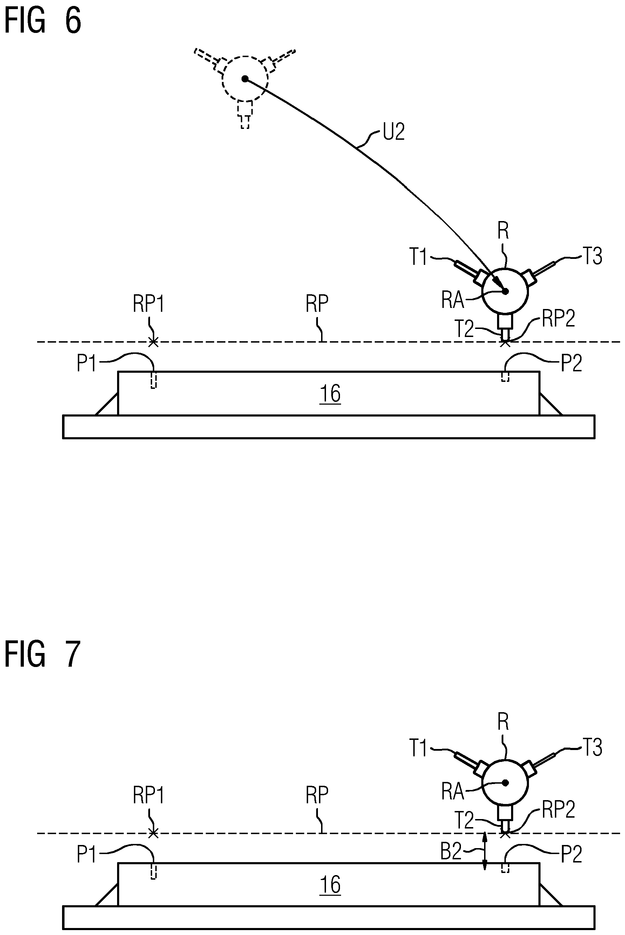

In einer nachfolgenden Umsetzbewegung U2 wird nun - wie in FIG 6 veranschaulicht - der TCP des Werkzeugs T2 in eine Rückzugsposition RP2 oberhalb der Bohrloch-Position P2 gebracht.

Wie in FIG 7 veranschaulicht, wird - analog zu FIG 2 - die Spindel, in der sich das Werkzeug T2 befindet, auf die Solldrehzahl gebracht und mit konstanter Vorschubgeschwindigkeit in Richtung des Werkstücks 16 (negative z-Richtung) bewegt, bis der TCP des Werkzeugs T2 die für das Bohrloch an der Position P2 vorgesehene Bohrtiefe erreicht hat. Anschließend wird das Werkzeug T2 in positiver z-Richtung zurück bewegt in die Ausgangsposition RP2. Diese Bewegungsvorgänge sind in FIG 7 durch den Doppelpfeil B2 angedeutet.

Wie aus den Figuren FIG 2 bis FIG 7 ersichtlich ist, erfolgen die Positionierbewegung (Umsetzbewegung) U1, die Schwenkbewegung (Werkzeugwechselbewegung) SRA und die Positionierbewegung (Umsetzbewegung) U2 zeitlich aufeinanderfolgend. Dies kostet Zeit und Energie.

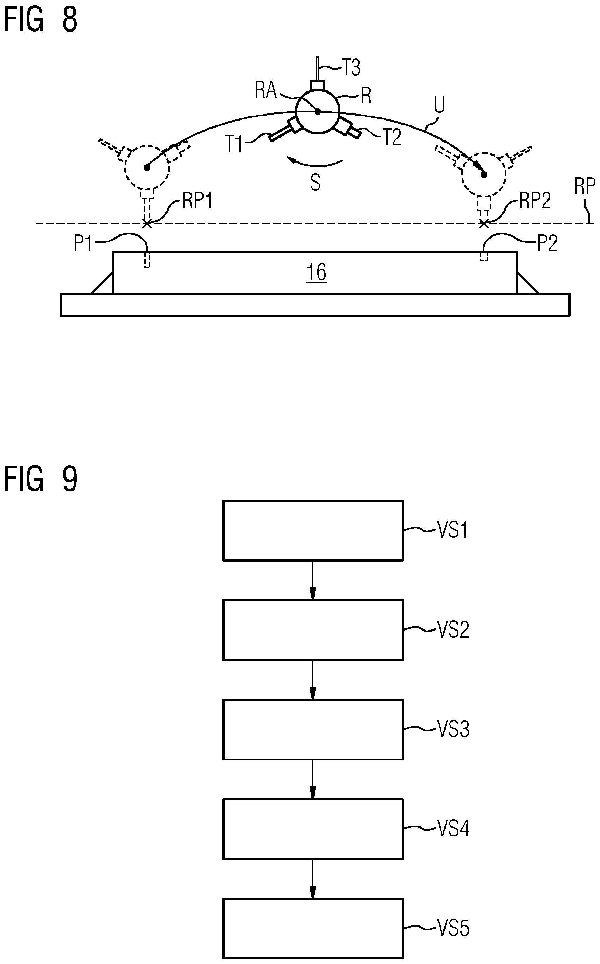

Anders hingegen bei der erfindungsgemäßen Lösung gemäß FIG 8, bei der die Umsetzbewegung U zwischen der Rückzugsposition RP1 und der Rückzugsposition RP2 sowie die Schwenkbewegung (Werkzeugwechselbewegung) S zumindest in einem Zeitabschnitt gleichzeitig erfolgen.

Vorteilhaft werden die Bewegungen S und U so aufeinander abgestimmt, dass diese zumindest näherungsweise die gleiche Zeitdauer beanspruchen. Insbesondere gibt dabei die Bewegung, die mehr Zeit benötigt, die Geschwindigkeit für die eigentlich schneller ablaufende Bewegung vor, derart, dass diese dann langsamer als möglich abläuft. Beide Bewegungen starten und enden damit zumindest näherungsweise gleichzeitig. Wenigstens eine Maschinenachse muss dadurch nicht so schnell bewegt bzw. nicht so stark beschleunigt werden, wie dies ohne diese Anpassung der Fall wäre. Auch dadurch wird der Energiebedarf gesenkt.

Für die Umsetzung der Erfindung gibt es verschiedene Möglichkeiten. Eine erste Möglichkeit sieht vor, dass für das bislang aktive Werkzeug T1 ein zeitlicher Verlauf von Posen bestimmt wird, der das Werkzeug T1 von der aus FIG 8 ersichtlichen Anfangspose (Ausrichtung in z-Richtung) in seine ebenfalls aus FIG 8 ersichtliche Ruhepose (Ausrichtung um 120° gegenüber der z-Richtung geschwenkt) überführt. Durch die mechanisch starre Verbindung der Werkzeuge durch den Werkzeugrevolver kann die Ruhepose des Werkzeugs T1 so bestimmt werden, dass dadurch am Ende der Bewegung das Werkzeug T2 die gewünschte aktive Pose (TCP an der Position RP2, Orientierung in z-Richtung) einnimmt. Erst danach wird das Werkzeug T2 als aktives Werkzeug definiert, auf das sich nachfolgende Bewegungsbefehle beziehen.

Eine zweite Möglichkeit sieht vor, dass zu Beginn des Werkzeugwechsels das Werkzeug T2 als aktives Werkzeug definiert wird. Ferner wird für das Werkzeug T2 ein zeitlicher Verlauf von Posen derart bestimmt, dass das Werkzeug T2 von der aus FIG 8 ersichtlichen Ruhepose (Ausrichtung um 120° gegenüber der z-Richtung geschwenkt) in seine ebenfalls aus FIG 8 ersichtliche aktive Pose (TCP an der Position RP2, Orientierung in z-Richtung) überführt wird.

Die beiden o.g. Möglichkeiten haben gemeinsam, dass die Bahnerzeugung - wie bei Werkzeugmaschinen üblich - stets für ein aktives Werkzeug bzw. dessen TCP erfolgt.

Eine weitere Möglichkeit sieht vor, dass die beiden überlagerten Bewegungen nicht für ein aktives Werkzeug bzw. dessen TCP, sondern davon losgelöst bestimmt und ausgeführt werden. So können im Ausführungsbeispiel gemäß FIG 8 einerseits die Bewegung der Rundachse RA im Raum (Umsetzbewegung U) und andererseits die Schwenkbewegung S des Werkzeugrevolvers R um diese Rundachse RA bestimmt und zeitgleich ausgeführt werden. Vorteilhaft ist dafür die Rundachse RA des Werkzeugrevolvers R als lagegeregelte Rundachse ausgeführt. Damit ist die für die Schwenkbewegung benötigte Zeitdauer durch die Steuerung vorgebbar.

Vorteilhaft wird wenigstens eine der o.g. Achsbewegungen als sogenannter "Eilgang" ("G0-Befehl") ausgeführt.

Eine Ausführungsform der Erfindung sieht vor, dass die o.g. Bewegungen (Trajektorien) der betreffenden Achsen (Maschinenachsen X, Y, Z, B, C; Rundachse RA) automatisch mittels der Steuerung 3 bestimmt und entsprechend umgesetzt werden. Eine alternative Ausführungsform sieht vor, dass die betreffenden Bewegungen mittels des aus Sicht der Werkzeugmaschine 2 externen CAD/CAM-Systems 5 automatisch bestimmt und - gegebenenfalls nach einer Anpassung der erzeugten Daten durch einen Postprozessor (nicht dargestellt) an die konkret vorhandene CNC Steuerung 3 - auf die Steuerung 3 übertragen werden und die Steuerung 3 die vorgegeben Bewegungen entsprechend steuert.

Vorteilhaft können die Komponenten der Maschine (Werkzeugmaschine), insbesondere die verstellbaren Maschinenachsen sowie der Mehrfachinstrumententräger (Werkzeugrevolver) und die damit verbundenen Instrumente (Werkzeuge), die mit diesen Komponenten ausführbaren Bewegungsvorgänge sowie das Objekt (Werkstück) und insbesondere auch die das Objekt betreffenden Vorgänge (Bohren von Löchern) anhand ihrer jeweiligen digitalen Repräsentanten (digitale Zwillinge) mittels einer geeigneten Simulationseinrichtung in einer Simulation veranschaulicht werden. Hierfür sind beispielsweise an der Steuereinrichtung (CNC-Steuerung 3) und/oder dem externen CAD/CAM/PP-System 5 (vgl. FIG 2) entsprechende Mittel und Daten vorhanden.

FIG 9 veranschaulicht wesentliche Verfahrensschritte bei der Ausführung eines erfindungsgemäßen Verfahrens:
In einem ersten Verfahrensschritt VS1 erfolgt ein Bereitstellen einer Maschine mit einem Mehrfachinstrumententräger, an dem mehrere Instrumente angeordnet sind.

In einem zweiten Verfahrensschritt VS2 erfolgt ein Bereitstellen eines Objektes, auf das nacheinander mittels mehrerer Instrumente des Mehrfachinstrumententräger eingewirkt werden soll.

In einem dritten Verfahrensschritt VS3 erfolgt ein Ausführen eines ersten das Objekt betreffenden Vorganges mit einem ersten Instrument.

In einem vierten Verfahrensschritt VS4 erfolgt ein Verändern einer Position des Mehrfachinstrumententrägers gegenüber dem Objekt mittels wenigstens einer von der Maschine umfassten verstellbaren Achse und gleichzeitig ein Überführen des ersten Instruments von einer aktiven in eine passive Pose und eines zweiten Instruments von einer passiven in eine aktive Pose.

In einem fünften Verfahrensschritt VS5 erfolgt ein Ausführen eines zweiten das Objekt betreffenden Vorganges mit dem zweiten Instrument.

## Patentansprüche

1. Verfahren zum Betrieb einer Maschine (2) mit wenigstens einer verstellbaren Maschinenachse (X, Y, Z, B, C) und mit einem wenigstens ein erstes (T1) und ein zweites Instrument (T2) tragenden Mehrfachinstrumententräger (R),
wobei nacheinander mittels des ersten Instruments (T1) ein erster ein Objekt (16) betreffender Vorgang und mittels des zweiten Instruments (T2) ein zweiter das Objekt betreffender Vorgang ausgeführt werden,
wobei zwischen den beiden Vorgängen zumindest in einem Zeitbereich eine Position des Mehrfachinstrumententrägers (R) gegenüber dem Objekt (16) mittels der verstellbaren Maschinenachse (X, Y, Z, B, C) verändert und gleichzeitig das erste Instrument (T1) von einer aktiven in eine passive Pose und das zweite Instrument (T2) von einer passiven in eine aktive Pose bewegt werden.

2. Verfahren nach Anspruch 1, wobei Instrumentenwechselbewegungen der Instrumente (T1, T2) und die Verfahrbewegung der Maschinenachse (X, Y, Z, B, C) so bestimmt werden, dass diese wenigstens im Wesentlichen simultan ausgeführt werden und die gleiche Zeitdauer benötigen.

3. Verfahren nach Anspruch 1 oder 2, wobei der Mehrfachinstrumententräger (R) eine verstellbare Mehrfachinstrumententrägerachse (RA) aufweist und die Instrumente (T1, T2) durch Verstellen der Mehrfachinstrumententrägerachse (RA) von der aktiven in die passive Pose und umgekehrt bewegbar sind.

4. Verfahren nach einem der vorherigen Ansprüche, wobei der Maschine (2) eine Steuereinrichtung (3) zugeordnet ist, die die Bewegungen der verstellbaren Maschinenachse (X, Y, Z, B, C) und der Instrumente (T1, T2) beim Überführen zwischen den Posen ermittelt und entsprechend steuert.

5. Verfahren nach Anspruch 4, wobei die Steuereinrichtung eine Kollisionsvermeidungseinrichtung umfasst und die Bewegungen derart bestimmt werden, dass keine Kollisionen auftreten.

6. Verfahren nach einem der Ansprüche 1 bis 3, wobei das Werkzeugmaschinensystem ein CAM-System, insbesondere ein CAD/CAM-System (5) umfasst, das die Bewegungen der Maschinenachse (X, Y, Z, B, C) und der Instrumente (T1, T2) beim Instrumentenwechsel automatisch ermittelt, wobei die ermittelten Bewegungen der Steuereinrichtung (3) zugeführt werden, die die betreffenden Achsen entsprechend steuert.

7. Verfahren nach einem der vorherigen Ansprüche, wobei das erste Instrument (T1) am Ende des ersten Vorgangs eine Endposition einnimmt und das zweite Instrument (T2) zu Beginn des zweiten Vorgangs eine von der Endposition verschiedene Startposition einnimmt.

8. Verfahren nach einem der vorherigen Ansprüche, wobei es sich bei der Maschine um eine Werkzeugmaschine (2), eine Arbeitsmaschine, eine Produktionsmaschine, einen 3D-Drucker, einen Roboter oder ein medizintechnisches Gerät handelt.

9. Verfahren nach einem der vorherigen Ansprüche, wobei es sich bei dem Instrument (T1, T2) um ein Werkzeug (T1, T2), eine Düse, ein chirurgisches Instrument, einen Aktor oder einen Endeffektor handelt.

10. Verfahren nach einem der vorherigen Ansprüche, wobei es sich bei dem Objekt (16) um ein Werkstück (16), ein Produkt oder ein Lebewesen handelt.

11. Verfahren nach einem der vorherigen Ansprüche, wobei es sich bei dem Vorgang um eine Herstellung, eine Be- und/oder Verarbeitung oder einen chirurgischen Eingriff handelt.

12. Maschine (2) mit wenigstens einer verstellbaren Maschinenachse (X, Y, Z, B, C) und mit einem wenigstens ein erstes (T1) und ein zweites Instrument (T2) tragenden Mehrfachinstrumententräger (R),
wobei nacheinander mittels des ersten Instruments (T1) ein erster ein Objekt (16) betreffender Vorgang und mittels des zweiten Instruments (T2) ein zweiter das Objekt (16) betreffender Vorgang ausführbar sind,
wobei zwischen den beiden Vorgängen zumindest in einem Zeitabschnitt eine Position des Mehrfachinstrumententrägers (R) mittels der verstellbaren Maschinenachse (X, Y, Z, B, C) veränderbar und gleichzeitig das erste Instrument (T1) von einer aktiven in eine passive Pose und das zweite Instrument (T2) von einer passiven in eine aktive Pose bewegbar sind.

13. Maschine (2) nach Anspruch 12, wobei der Mehrfachinstrumententräger (R) eine verstellbare Mehrfachinstrumententrägerachse (RA) aufweist und die Instrumente (T1, T2) durch Verstellen der Maschinenachse (X, Y, Z, B, C) von der aktiven in die passive Pose und umgekehrt bewegbar sind.

14. Maschine (2) nach Anspruch 12 oder 13, wobei der Maschine eine Steuereinrichtung (3) zugeordnet ist, mittels der die Bewegung der verstellbaren Maschinenachse (X, Y, Z, B, C) und der Instrumente (T1, T2) beim Überführen zwischen den Posen steuerbar ist.

15. Maschine (2) nach einem der Ansprüche 12 bis 14, wobei es sich bei der Maschine um eine Werkzeugmaschine (2), eine Arbeitsmaschine, eine Produktionsmaschine, einen 3D-Drucker, einen Roboter oder ein medizintechnisches Gerät handelt.

16. Maschine (2) nach einem der Ansprüche 12 bis 15, wobei es sich bei dem Instrument (T1, T2) um ein Werkzeug (T1, T2), eine Düse, ein chirurgisches Instrument, einen Aktor oder einen Endeffektor handelt.

17. Maschine (2) nach einem der Ansprüche 12 bis 16, wobei der Mehrfachinstrumententräger (R) lösbar mit der Maschine verbindbar ist.

18. Steuereinrichtung (3) zur Durchführung eines Verfahrens nach einem der Ansprüche 1 bis 11 zur Steuerung einer Maschine (2) nach einem der Ansprüche 12 bis 17 mit wenigstens einer verstellbaren Maschinenachse (X, Y, Z, B, C) und mit einem wenigstens ein erstes (T1) und ein zweites Instrument (T2) tragenden Mehrfachinstrumententräger (R), wobei nacheinander mittels des ersten Instruments (T1) ein erster ein Objekt (16) betreffender Vorgang und mittels des zweiten Instruments (T2) ein zweiter das Objekt (16) betreffender Vorgang ausführbar sind,
wobei zwischen den beiden Vorgängen zumindest in einem Zeitbereich eine Position des Mehrfachinstrumententrägers (R) gegenüber dem Objekt (16) mittels der verstellbaren Maschinenachse (X, Y, Z, B, C) veränderbar und gleichzeitig das erste Instrument (T1) von einer aktiven in eine passive Pose und das zweite Instrument (T2) von einer passiven in eine aktive Pose bewegbar sind.

19. Steuereinrichtung (3) nach Anspruch 18, umfassend eine Kollisionsvermeidungseinrichtung, mittels der die Bewegungen derart bestimmbar sind, dass keine Kollisionen auftreten.

20. Digitaler Zwilling einer Maschine (2) nach einem der Ansprüche 12 bis 17 und/oder einer Steuereinrichtung (3) nach einem der Ansprüche 18 oder 19 zur Simulation der Durchführung eines Verfahrens nach einem der Ansprüche 1 bis 11,
